Europäisches Patentamt

European Patent Office

Office européen des brevets

(11) Veröffentlichungsnummer: **0 231 463**

**A1**

(19)

(12) **EUROPÄISCHE PATENTANMELDUNG**

(21) Anmeldenummer: **86116352.5**

(22) Anmeldetag: **25.11.86**

(51) Int. Cl.⁴: **F01N 9/00 , F02M 31/06**

(30) Priorität: **22.01.86 DE 3601784**

(43) Veröffentlichungstag der Anmeldung:
**12.08.87 Patentblatt  87/33**

(84) Benannte Vertragsstaaten: ·
**DE ES FR GB IT**

(71) Anmelder: **KNECHT Filterwerke GmbH**
**Haldenstrasse 48**
**D-7000 Stuttgart 50(DE)**

(72) Erfinder: **Möhle, Rolf**
**Weinsbergerstrasse 8**
**D-7117 Scheppach(DE)**
Erfinder: **Gebert, Hans**
**Eppingerstrasse 64**
**D-7100 Heilbronn-Böckingen(DE)**
Erfinder: **Schilling, Wolfgang**
**Eberhardstrasse 2**
**D-7050 Waiblingen-Hegnach(DE)**

(74) Vertreter: **Pfusch, Volker, Dipl.-Ing.**
**MAHLE GMBH Patentabteilung Pragstrasse**
**26-46 Postfach 50 07 69**
**D-7000 Stuttgart 50(DE)**

(54) **Einrichtung zur Vorwärmung der Ansaugluft in Dieselmotoren.**

(57) Bei einer Einrichtung zur Verwärmung der Ansaugluft von Dieselmotoren ist in einem Mischventil - (2) kalte und durch die Motorwärme erwärmte Luft zu einem Ansaugluftgemisch vermischbar. Das Mischventil ist durch einen Membranmotor (6), der durch den von einer Vakuumpumpe (9) erzeugten Unterdruck antreibbar ist, verstellbar. Die Antriebsenergie für den Membranmotor (6) wird durch Steuerung eines Belüftungsventils (10) in der Verbindungsleitung (8) zwischen Vakuumpumpe und Membranmotor (6) variiert. Die Steuerung des Belüftungsventils erfolgt in Abhängigkeit der Abgastemperatur. Mit der Einrichtung wird insbesondere das Ziel verfolgt, bei Dieselmotoren mit Abgasreinigungsvorrichtungen zum Sammeln und Abbrennen in dem Abgas enthaltener Rußpartikel die Abgastemperatur gegebenefalss durch Zumischung vorgewärmter Ansaugluft soweit zu erhöhen, daß ein Abbrennen des Rußes erfolgen kann. Das zur Mischung der Ansaugluft zu verwendende Mischventil - (2) soll einfach und kostengünstig herstellbar sein.

Fig. 3

## Einrichtung zur Vorwärmung der Ansaugluft von Dieselmotoren

Die Erfindung betrifft eine Einrichtung zur Vorwärmung der Ansaugluft von Dieselmotoren, mit der in einem Mischventil kalte und durch die Motorwärme erwärmte Luft zu einem Ansaugluftgemisch vermischbar ist.

Eine solche Einrichtung ist aus DE-OS 24 38 118 bekannt.

Hiervon ausgehend liegt der Erfindung die Aufgabe zugrunde, für das Mischventil einen möglichst einfachen und kostengünstig herstellbaren Antrieb zu schaffen. Darüber hinaus soll der Antrieb so gesteuert werden, daß die Ansaugluft immer dann mit erwärmter Luft vermischt wird oder daß überhaupt nur erwärmte Luft als Ansaugluft dem Motor zugeführt wird, wenn die Abgastemperatur unterhalb eines bestimmten ·vorgebbaren Grenzwertes liegt. Dieser Grenzwert ist bei Dieselmotoren, bei denen in den Abgasleitungen Einrichtungen zum Verbrennen der Rußpartikel im Abgas vorgesehen sind, insofern von Bedeutung, als die Rußpartikel unterhalb jener Grenztemperatur nicht abbrennen. Durch die Vorwärmung der Ansaugluft soll dann die zum Abbrennen der Rußpartikel erforderliche Höhe der Abgastemperatur erreicht werden. Die Erfindung ist daher in erster Linie zur Verwendung bei solchen Dieselmotoren mit einer Rußabbrennvorrichtung im Abgasleitungssystem gedacht.

Gelöst wird die erfindungsgemäße Aufgabe durch eine Ausgestaltung der Einrichtung nach den Merkmalen des kennzeichnenden Teils des Patentanspruchs 1.

Zweckmäßige Ausgestaltungen der Erfindung sind Gegenstand der Unteransprüche und werden im Zusammenhang mit den in der Zeichnung dargestellten Ausführungsbeispielen noch näher erläutert.

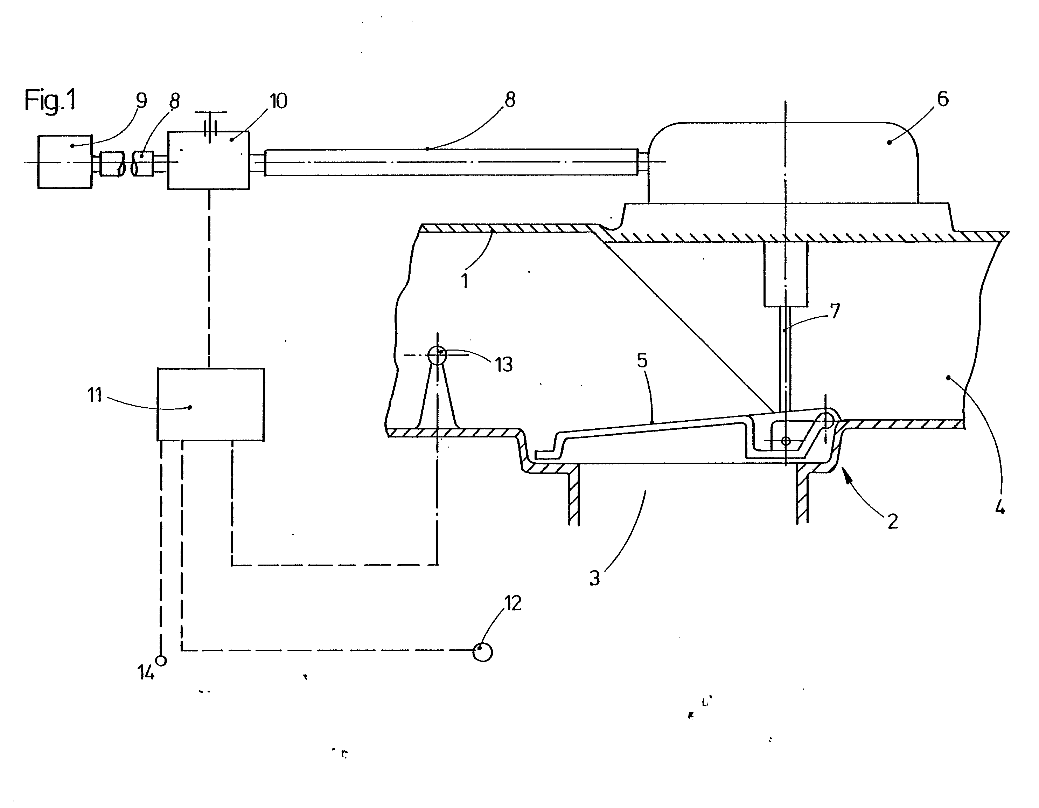

In der Zeichnung zeigen
Fig. 1 -3 3 alternative Ausführungsformen einer AnsaugluftVorwärm-Einrichtung.

Der zu den Brennräumen des Dieselmotors führende Ansaugstutzen 1 ist an seinem den Brennräumen abgewandten Ende als Mischventil 2 ausgebildet. Das Mischventil besitzt einen Warmlufteinlaßkanal 3 sowie einen Kaltlufteinlaßkanal 4. Die beiden Einlaßkanäle sind mittels einer Ventilklappe 5 veränderbar. Die Veränderung erfolgt derart, daß mit zunehmender Veränderung des geöffneten Querschnittes das einen Einlaßkanals der Querschnitt des anderen Einlaßkanals verkleinert wird. Ist einer der beiden Einlaßkanäle vollständig verschlossen, so ist der andere dann zwangsläufig vollständig geöffnet. Verstellt wird die Ventilklappe 5 durch einen pneumatisch angetriebenen Membranmotor 5. Eine mit einem Stellglied 7 für die Ventilklappe 5 verbundene Membran den Membranmotors steht über eine Leitung 8 mit einer Vakuumpumpe 9 in Verbindung. Eine solche Vakuumpumpe ist bei Dieselmotoren für Kraftfahrzeuge in der Regel zur Erzeugung eines unterdruckbetätigten Bremskraftverstärkers vorhanden.

Der Membranmotor 6 ist so ausgelegt, daß bei voll anstehendem Unterdruck an dessen Membran der Strömungsquerschnitt des Kaltlufteinlaßkanals 4 vollständig durch die Ventilklappe 5 verschlossen ist. Mit abnehmendem Unterdruck öffnet die Ventilklappe 5 den in das Mischventil 2 mündenden Strömungsquerschnitt des Kaltlufteinlaßkanals 4 fortschreitend bei gleich zeitiger Verkleinerung des Eintritts-Strömungsquerschnittes des Warmlufteinlaßkanals 3. Bei vollständig abgebautem Unterdruck ist der Eintrittsquerschnitt des Warmlufteinlaßkanals 3 jeweils voll durch die Ventilklappe 5 abgedeckt.

Die jeweilige Stellung der Ventilklappe 5 hängt also von dem an der Membran des Membranmotors 6 anstehenden Unterdruck ab. Während des Motorbetriebs sorgt die Vakuumpumpe 9 für einen konstanten Unterdruck in der Leitung 8 vor dem Membranmotor 6. Zur Variation des Unterdrucks in der Leitung 8 und damit zur Stellung der Ventilklappe 5 wird in der Leitung 8 eine querschnittsveränderbare zur Atmosphäre weisende Öffnung vorgesehen. Für die Querschnittsveränderung dieser öffnung ist an dieser ein steuerbares Belüftungsventil 10 vorgesehen. Dieses Belüftungsventil kann z.B. ein Magnetventil sein, das seine Steuerimpulse aus einem elektronischen Impulsgeber 11 erhält. Der Impulsgeber 11 erarbeitet seine Steuerimpulse in Abhängigkeit der ihm über einen Meßfühler 12 zugeleiteten Temperaturwerte des Dieselmotor-Abgases. Dabei ist der Impulsgeber so ausgelegt, daß er das Belüftungsventil 10 immer dann in Belüftungsstellung hält, wenn die Abgastemperatur über einem vorbestimmten Grenzwert liegt. Wird dieser Temperaturgrenzwert überschritten, so - schaltet der Impulsgeber 11 das Belüftungsventil 10 in Schließstellung mit der Folge, daß der von der Vakuumpumpe konstant erzeugte Unterdruck voll an dem Membranmotor 6 ansteht. Für die Ventilklappe 5 bedeutet dies, daß diese dann die Zuströmöffnung des Kaltlufteinlaßkanals 4 voll abdeckt.

Teilweise ist es erwünscht, daß die Temperatur der in dem Ansaugstutzen 1 eintretenden Ansaugluft nicht unterhalb eines bestimmten vorgebbaren Wertes liegt. Bei Dieselmotoren für Kraftfahrzeuge will man durch eine solche Maßnahme z.B. vermeiden, daß es bei niedrigen Temperaturen zu einer etwa durch Schneeeinfall bedingten Vereisung des in dem Ansaugstutzen 1 angebrachten Luftfilters kommen kann. In solchen Fällen wird innerhalb des Ansaugstutzens 1 innerhalb der Mischluft ein weiterer Meßfühler 13 vorgesehen, der die von ihm ermittelten Temperaturmeßwerte ebenfalls dem elektronischen Impulsgeber 11 zuführt. Der Impulsgeber 11 verarbeitet diese von dem Meßfühler 13 erhaltenen Meßsignale in der Weise, daß er bei aufgrund der Meßsignale des Meßfühlers 13 geöffnetem Belüftungsventil 10 dieses soweit in Schließstellung bringt, daß vor der Membran des Membranmotors 6 ein die Membran und damit gleichzeitig die Ventilklappe 5 verstellender Unterdruck in der Leitung 8 wirksam wird. Das Belüftungsventil kann dabei derart zwischen voll geöffnet und geschlossen verstellt werden, daß die Ventilklappe 5 alle Zwischenstellungen zwischen voll geöffneten und geschlossenen Einlaßkanälen 3, 4 einnehmen kann.

Die in dem Impulsgeber 11 eingeführten Signale aus den Meßfühlern 12 und 13 können noch durch ein weiteres Signal 14 überlagert werden. Dieses Signal 14 wird bei Volllastbetrieb des Dieselmotors ausgelöst und führt in dem Impulsgeber dazu, daß unabhängig von den Signalen der Meßfühler 12 und 13 das Belüftungsventil 10 zwangsweise in Öffnungsstellung gebracht wird.

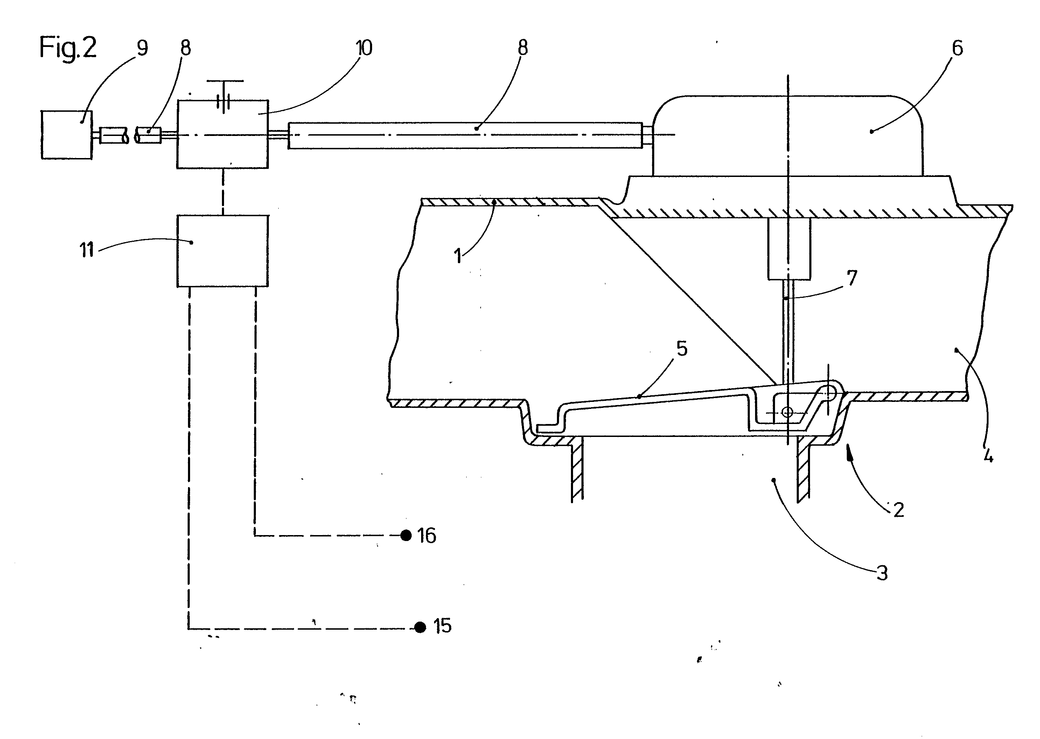

Abweichend von dem vorstehend beschriebenen in Figur 1 dargestellten Ausführungsbeispiel kann wie in Figur 2 dargestellt die Steuergröße für das Belüftungsventil von der Höhe des drehzahlbezogenen Abgasgegendruckes abhängig sein.

Dabei wird von folgender Überlegung ausgegangen. Es ist das Ziel, in der Abgasreinigungsvorrichtung, in der im Abgas enthaltene Rußpartikelchen verbrannt werden sollen, den durch sich unverbrannt in der Einrichtung absetzenden Anteil an Rußpartikeln ansteigenden Durchflußwiderstand auf ein bestimmtes Maß zu begrenzen. Ein ansteigender Durchflußwiderstand bedingt wiederum einen erhöhten Abgasgegendruck im Abgas vor der Reinigungsvorrichtung. Andererseits ist der Absolutwert des Abgasgegendruckes von der Motordrehzahl abhängig. Die zur Steuerung des Belüftungsventils 10 heranzuziehenden Abgasgegendruckwerte sind also nur unter Berücksichtigung der jeweils gleichzeitig herrschenden Motordrehzahl verwendbar. Soll der Abgasgegendruck damit als Steuergröße herangezogen werden, so sind Meßeinrichtungen 15 und 16 zur gleichzeitigen Erfassung des Abgasgegendruckes und der Motordrehzahl erforderlich. Die in den Meßeinrichtungen 15 und 16 ermittelten Werte werden dem elektronischen Impulsgeber 11 zugeführt, in dem der jeweils gemessene Abgasgegendruck drehzahlbezogen mit einem vorgegebenen Grenzwert verglichen wird, bei dessen Überschreitung der Impulsgeber 11 ein Schließen des Belüftungsventiles 10 bewirkt.

Der Vorteil der zuletzt beschriebenen Einrichtung besteht darin, daß den Brennkammern des Motors tatsächlich immer nur dann vorgewärmte Ansaugluft zugeführt wird, wenn es der Zustand der Abgasreinigungsvorrichtung wegen zu hohen Rußpartikelanteils unbedingt erfordert. Auch bei der zuletzt beschriebenen Einrichtungsvariante kann die Temperatur in dem Ansaugstutzen 1 noch zusätzlich zur Verstellung des Mischventils 2 wie in dem Ausführungsbeispiel nach Figur 1 mit herangezogen werden. Das gleiche gilt im Prinzip für eine Überlagerung des Volllast-Signales 14.

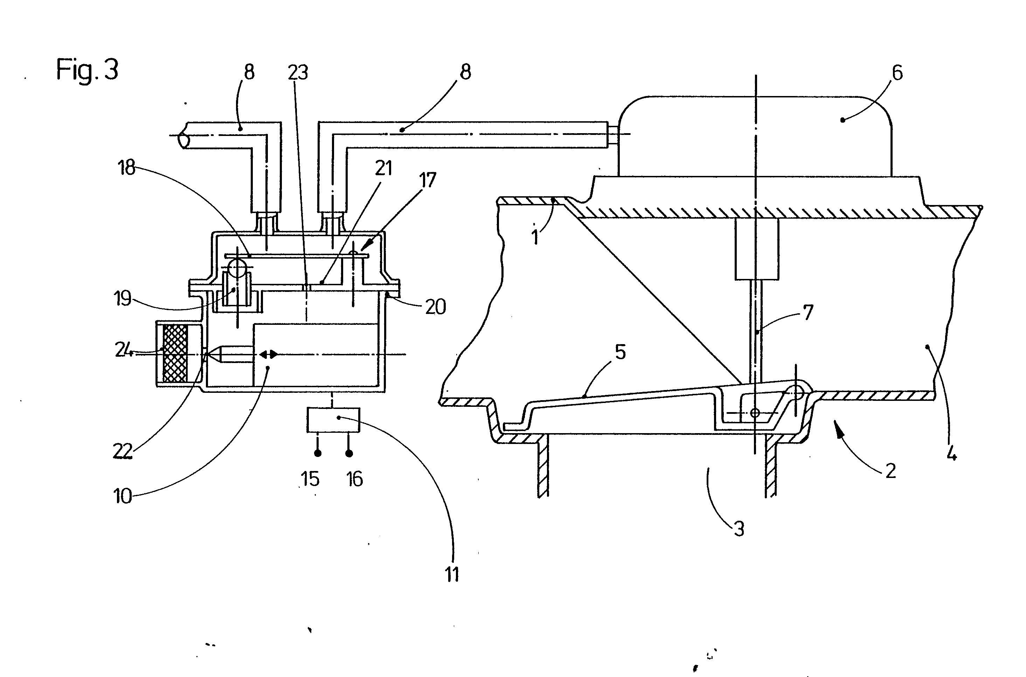

Bei dem Ausführungsbeispiel nach Figur 3 ist das Belüftungsventil 10 mit einem Termostatventil 17 kombiniert. Dieses Termostatventil besitzt eine Bimetallfeder 18, mit der der Öffnungsquerschnitt einer zwischen dem Belüftungsventil 10 und dem Inneren der Leitung 8 liegenden Zwischenöffnung 19 steuerbar ist. Das Gebilde aus Termostatventil 17 und Belüftungsventil 10 ist stromab des Mischventiles 2 in dem Mischluftstrom so angeordnet, daß die jeweilige Mischlufttemperatur direkt auf die Bimetallfeder 18 einwirken kann. Da das Termostatventil 17 zusammen mit dem Belüftungsventil 10 von einem Gehäuse 20 umgeben ist, sind zur direkten Kontaktierung der Bimetallfeder durch die Mischluft zusätzliche besondere Maßnahmen erforderlich. Diese bestehen darin, daß in der Wand 21, die innerhalb des Gehäuses 20 die Belüftungsöffnung 22 von dem Innenraum der Leitung 8 trennt, strömungsmäßig parallel zu der Zwischenöffnung 19 eine Drosselbohrung 23 vorgesehen ist. Bei geöffnetem Belüftungsventil 10 kann dadurch durch die Belüftungsöffnung 22 und die Drosselbohrung 23 ein geringer Mischluftstrom die Bimetallfeder 18 umströmen. Dieser Spülstrom ist so gering, daß der in der Leitung 8 herrschende Unterdruck dadurch nicht merklich beeinflußt wird.

Das Termostatventil 17 hat die folgende Funktion.

Grundsätzlich kann es nur dann wirksam sein, wenn das Belüftungsventil 10 sich in Offenstellung befindet, d.h. wenn aufgrund der gemessenen Abgastemperatur oder dazu proportionaler Betriebsdaten bzw. des gemessenen Abgasgegendruckes eine Warmluftzufuhr an sich nicht notwendig ist. Nur in diesem Fall kann das Termostatventil die Stellung der Ventilklappe 5 des Mischventils 2 beeinflussen. Die Bimetallfeder ist so ausgelegt, daß Sie unterhalb eines bestimmten vorgebbaren Temperaturwertes die Zwischenöffnung 19 verschlossen hält. Steigt die Mischluft jedoch über diesen vorgegebenen Grenzwert an, so wird die Zwischenöffnung 19 fortschreitend freigegeben. Je nach der Mischlufttemperatur kann die Ventilklappe 5 durch das Termostatventil 17 in jede Stellung zwischen ihren Endlagen einreguliert werden.

Ist das Belüftungsventil 10 dagegen geschlossen, ist das Termostatventil wirkungslos. Zum Schutz gegen in das Unterdrucksystem eintretende Schmutzteilchen kann vor der Belüftungsöffnung 22 ein Filter 24 vorgesehen sein.

## Ansprüche

1. Einrichtung zur Vorwärmung der Ansaugluft von Dieselmotoren, mit der in einem Mischventil kalte und durch die Motorwärme erwärmte Luft zu einem Ansaugluftgemisch vermischbar ist, dadurch **gekennzeichnet,** daß das Mischventil (2) einen Pneumatikantrieb mit folgenden Merkmalen aufweist:

(a) das Mischventil (2) enthält ein druckabhängig verstellbares Stellglied (7), das über eine Pneumatik-Leitung (8) mit dem Unterdruckraum einer Vakuumpumpe (9) verbunden ist,

(b) in dem zwischen dem Stellglied (7) und der Vakuumpumpe (9) liegenden Unterdruckraum ist eine Belüftungsöffnung (22) zur Atmosphäre vorgesehen, deren Öffnungsquerschnitt zur Einstellung der Höhe des auf das Stellglied (7) des Mischventils (2) wirksamen Unterdrucks durch ein Belüftungsventil (10) geöffnet und verschlossen werden kann,

(c) die Verstellung des Belüftungsventils - (10) erfolgt in Abhängigkeit der Höhe der Abgas-Temperatur oder eines dieser Temperatur in etwa proportionalen anderen Motorbetriebszustandswertes, wie z.B. der Drehzahl oder des drehzahlbezogenen Abgasgegendruckes,

(d) bei geschlossener Belüftungsöffnung - (22) ist in dem Mischventil (2) der Kaltlufteinlaßkanal (4) verschlossen,

(e) bei unverschlossener Belüftungsöffnung - (22) ist in dem Mischventil (2) der Warmlufteinlaßkanal (3) verschlossen,

(f) bei einer Abgastemperatur unterhalb eines bestimmten vorgebbaren Wertes bzw. eines Motorbetriebszustandswertes, der der Höhe der Abgastemperatur in etwa proportional ist oder oberhalb eines bestimmten vorgebbaren drehzahlbezogenen Abgasgegendruckwertes ist die Belüftungsöffnung (22) verschlossen, während sie im übrigen unverschlossen ist.

2. Einrichtung nach Anspruch 1, dadurch **gekennzeichnet,** daß der Steuergröße für das Belüftungsventil (10) in Zuständen, nach denen die Belüftungsöffnung - (22) nach dem Merkmal f des Anspruchs 1 unverschlossen wäre, eine weitere Steuergröße wirksam überlagert ist, die von der Höhe der Temperatur der Ansaugmischluft im Ansaugstutzen (1) folgendermaßen abhängig ist:

(a) für die Mischlufttemperatur ist ein Sollwert oder ein Sollwertbereich vorgegeben,

(b) liegt der Ist-Wert der Mischlufttemperatur unterhalb des Sollwertes bzw. Sollwertbereiches nach Merkmal a, erfolgt eine Verstellung des Querschnittes der Belüftungsöffnung (22) dahingehend, daß die Mischlufttemperatur in den Sollbereich zu liegen kommt.

3. Einrichtung nach Anspruch 1, **gekennzeichnet** durch die Merkmale:

(a) der Belüftungsöffnung (22) ist in Richtung des Unterdruckraumes in der Leitung (8) eine Zwischenöffnung (19) in Reihe vorgeschaltet,

(b) der zwischen der Belüftungsöffnung (22) und der Zwischenöffnung (19) liegende Raum ist allseits abgeschlossen,

(c) die Zwischenöffnung (19) ist mit einem der Temperatur der Mischluft ausgesetzten Thermostatventil (17) versehen, das unterhalb einer bestimmten vorgebbaren Grenztemperatur die Zwischenöffnung (19) verschlossen hält und diese oberhalb dieser Grenztemperatur mit ansteigender Mischlufttemperatur fortschreitend bis auf einen vorgegebenen maximalen Strömungsquerschnitt öffnet,

(d) die Verstellung des Strömungsquerschnittes der Belüftungsöffnung (22) erfolgt nach den Merkmalen des Anspruchs 1.

4. Einrichtung nach einem der vorhergehenden Ansprüche, dadurch **gekennzeichnet,** daß bei Vollast des Dieselmotors eine Verbindung von dem Unterdruckraum in der Leitung (8) zur Atmosphäre geschaltet ist, die unabhängig von dem Zustand aller anderen Motorbetriebsdaten einen wirksamen Unterdruck in dem Membranmotor - (6) aufhebt.

5. Einrichtung nach einem der vorhergehenden Ansprüche, bei der in dem Mischventil bei fehlendem Unterdruck der Kaltlufteinlaßkanal abgesperrt und bei voll anstehendem Unterdruck der Warmlufteinlaßkanal voll abgesperrt ist, dadurch **gekennzeichnet,** daß die Strömungsquerschnitte in den von dem Unterdruckraum der Leitung (8) zur Atmosphäre weisenden Öffnungen in nach den Ansprüchen 1 bis 4 umgekehrtem Sinne gesteuert werden, d.h. verschlossen sind, wenn sie nach den Ansprüchen 1 -4 unverschlossen wären und unverschlossen, wenn sie nach den Ansprüchen 1 -4 verschlossen wären.

Fig.1

Fig.2

0 231 463

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | PATENT ABSTRACTS OF JAPAN, Band 8, Nr. 28 (M-274)[1465], 7. Februar 1984; & JP - A - 58 187 513 (TOYOTA) 01.11.1983 | 1 | F 01 N 9/00<br>F 02 M 31/06 |
| | --- | | |
| Y | US-A-3 982 517 (FALES et al.)<br>* ganzes Dokument * | 1 | |
| | --- | | |
| A | PATENT ABSTRACTS OF JAPAN, Band 8, Nr. 182 (M-319)[1619], 22. August 1984; & JP - A - 59 74319 (TOYO KOGYO) 26.04.1984 | 1 | |
| | --- | | |
| A | DE-B-2 011 654 (FILTERWERK MANN & HUMMEL)<br>* ganzes Dokument * | 2-4 | **RECHERCHIERTE SACHGEBIETE (Int. Cl.4)** |
| | --- | | |
| A | PATENT ABSTRACTS OF JAPAN, Band 6, Nr. 83 (M-130)[961], 21. Mai 1982; & JP - A - 57 20548 (NIPPON DENSO) 03.02.1982 | 2,5 | F 01 N 3/00<br>F 01 N 9/00<br>F 02 M 31/00 |
| | --- | | |
| A | EP-A-0 010 384 (GENERAL MOTORS) | | |
| | --- | | |
| A | US-A-4 133 327 (INOUE) | | |
| | ----- | | |

Der vorliegende Recherchenbericht wurde für alle Patentansprüche erstellt.

| Recherchenort | Abschlußdatum der Recherche | Prüfer |
|---|---|---|
| BERLIN | 03-04-1987 | LEMBLE Y.A.F.M. |